# EUROPÄISCHE PATENTANMELDUNG

(11) **EP 1 054 565 A2**
(43) Veröffentlichungstag der Anmeldung: **22.11.2000**
(21) Anmeldenummer: 00440133.7
(22) Anmeldetag: 09.05.2000
(51) Int. Cl.: H04N 7/173

(54) **Zugangsmethode zu Kontaktinformationen von Werbespots im Fernsehen**

(30) Priorität: 21.05.1999 DE 19923509
(71) Anmelder: ALCATEL, 75008 Paris (FR)
(72) Erfinder: Lautenschlager, Wolfgang, 71287 Weissach-Flacht (DE); Stürz, Heinz, Dr., 01187 Dresden (DE)
(74) Vertreter: Zinsinger, Norbert

(57) **Zusammenfassung**

Ein Verfahren zum Erlangen von Zusatzinformation betreffend einen an einem Endgerät (=Terminal) empfangenen Fernseh (=TV)- Beitrag, ist gekennzeichnet durch folgende Schritte:
parallel zu der Information, die den an den Bildschirmen der TV-Zuschauer dargestellten TV-Beitrag repräsentiert, wird mindestens eine dem TV-Beitrag zugeordnete elektronische Adresse gesendet;
wenn ein TV-Zuschauer Zusatzinformation zu dem TV-Beitrag über sein Terminal anfordert, stellt das Terminal über die zugeordnete elektronische Adresse eine Verbindung zu einem Server her, der die gewünschte Zusatzinformation aus einer Datenbank dem anfordernden Terminal bereitstellt, oder eine Verbindung zu einem Call Center, welches die gewünschte Zusatzinformation an den anfordernden TV-Zuschauer weiterleitet.

Damit kann ein TV-Zuschauer, der einen Fernsehbeitrag empfängt, möglichst schnell und einfach Zugriff auf weitergehende Zusatzinformationen bekommen, die sich auf diesen TV-Beitrag beziehen. Außerdem wird eine Möglichkeit für den Auftraggeber des TV-Beitrages eröffnet, eine Rückkopplung zu den Adressaten des Beitrages zu erhalten und in Kontakt mit potentiellen Kunden zu treten.

## Beschreibung

Die Erfindung betrifft ein Verfahren zum Erlangen von Zusatzinformation betreffend einen an einem Endgerät (=Terminal) empfangenen Fernseh (=TV)- Beitrag, einen Multimedia-Server zur Unterstützung des Verfahrens sowie ein Mulitmedia-Terminal zur Durchführung des Verfahrens.

Allgemein bekannt ist es, in TV-Beiträgen zu bestimmten Zeiten, meist am Anfang oder Ende des Beitrags, Telefonnummern, Postadressen oder Internet-Adressen in das gesendete Fernsehbild einzublenden, um dem Zuschauer die Möglichkeit zu geben, Zusatzinformation über den entsprechenden Beitrag zu erlangen, Bestellungen aufzugeben, Geld für mildtätige Zwecke zu spenden und dergleichen.

Diese Verfahrensweise ist aber für den TV-Zuschauer umständlich und mühsam, da er erst über ein anderes Medium, beispielsweise das Telefon, die Briefpost, das Internet etc. Kontakt mit einer externen Stelle aufnehmen muß. Außerdem muß er vorher rechtzeitig die entsprechende Information vom Bildschirm notiert haben.

Kommt im Fernsehen beispielsweise ein Werbespot, der den Zuschauer interessiert, dann hat der Zuschauer am Ende des Spots oftmals den Namen, die Rufnummer oder irgend eine andere wichtige Information nicht mitbekommen oder vergessen oder wünscht weitere Infos. Ein weiterer Fall ist, daß der Zuschauer mittels Videotext sich verschiedene Seiten ansieht und weitere Informationen haben will.

Auch aus Sicht des Urhebers des Werbespots ist dieser Sachverhalt unbefriedigend, er sucht ja den Kontakt zum Zuschauer, damit dieser zum Kunden wird.

Aus der WO 95 23 480 A1 ist es beispielsweise bekannt, zusätzliche Informationen mit einem TV-Signal in geeigneten Zeitintervallen relativ zu dem TV-Signal zu transportieren. Das zusätzliche Informationssignal wird dabei in den freien Zeilen-Zeitintervallen zusammen mit oder ohne equalisierenden Impulsen als zusätzliche Information gesendet. Der Vorteil dieser Vorgehensweise ist eine Erhöhung der Sendekapazität auf TV-Kanälen. Eine direkte Kontaktmöglichkeit oder eine Reaktion des Empfängers des TV-Signals auf die ankommende Information ist jedoch nicht vorgesehen.

Aufgabe der vorliegenden Erfindung ist es demgegenüber, ein Verfahren der eingangs beschriebenen Art dahingehend weiterzuentwickeln, daß ein TV-Zuschauer, der einen Fernsehbeitrag empfängt, möglichst schnell und einfach Zugriff auf weitergehende Zusatzinformationen bekommen kann, die sich auf diesen TV-Beitrag beziehen, und daß eine Möglichkeit für den Auftraggeber des TV-Beitrages eröffnet wird, eine Rückkopplung zu den Adressaten des Beitrages zu erhalten und in Kontakt mit potentiellen Kunden zu treten.

Erfindungsgemäß wird diese Aufgabe auf ebenso überraschend einfache wie wirkungsvolle Art und Weise dadurch gelöst, daß parallel zu der Information, die den an den Bildschirmen der TV-Zuschauer dargestellten TV-Beitrag repräsentiert, mindestens eine dem TV-Beitrag zugeordnete elektronische Adresse gesendet wird; wenn ein TV-Zuschauer Zusatzinformation zu dem TV-Beitrag über sein Terminal anfordert, stellt das Terminal über die zugeordnete elektronische Adresse eine Verbindung zu einem Server her, der die gewünschte Zusatzinformation aus einer Datenbank dem anfordernden Terminal bereitstellt, oder eine Verbindung zu einem Call Center, welches die gewünschte Zusatzinformation an den anfordernden TV-Zuschauer weiterleitet.

Zur verbesserten Präsentation der Zusatzinformation ist eine Verfahrensvariante bevorzugt, bei der die übermittelte Zusatzinformation neben Textinformation auch graphische Information und/oder akustische Information umfaßt. Es können aber auch andere Sinne angesprochen werden, indem beispielsweise Geruchssignale, thermische oder taktile Informationen übermittelt werden.

Ganz besonders bevorzugt ist eine Verfahrensvariante, bei der die bereitgehaltene Information in der Datenbank oder im Call-Center ständig, insbesondere automatisch aktualisiert wird, so daß der TV-Zuschauer jeweils Daten abrufen kann, die auf dem neusten Stand sind.

Ganz besonders bevorzugt ist eine Variante des erfindungsgemäßen Verfahrens, bei der zusammen mit der Übermittlung der Zusatzinformation auch die Möglichkeit zur Eröffnung eines interaktiven Dialoges zwischen dem Terminal des TV-Zuschauers und dem angesprochenen Server angeboten wird. Hierdurch ergeben sich eine Vielzahl von neuen Möglichkeiten der Kommunikation zwischen dem Auftraggeber bzw. Hersteller eines TV-Beitrages und den angesprochenen Zuschauern.

Bei einer vorteilhaften Weiterbildung dieser Verfahrensvariante kann der TV-Zuschauer im interaktiven Dialog mit dem angesprochenen Server weitere, nicht in der Datenbank gespeicherte Informationen, beispielsweise vom Auftraggeber bzw. Hersteller des TV-Beitrages angebotene Produkte, Dienstleistungen, Prospekte, detaillierte Produktunterlagen, Referenzen etc. anfordern.

Um einen unberechtigten Zugriff auf vertrauliche Informationen abzuwehren, kann bei einer Weiterbildung der TV-Zuschauer bestimmte Zusatzinformationen nur dann abrufen, wenn er ein bestimmtes Paßwort eingibt und/oder wenn die Adresse seines Terminals in einer, beispielsweise vom Auftraggeber des TV-Beitrages erstellten Positivliste (= white list) gespeichert ist, auf die der angesprochene Server Zugriff hat.

Ganz besonders nützlich ist auch eine Weiterbildung der oben beschriebenen Verfahrensvariante, bei der der TV-Zuschauer im interaktiven Dialog mit dem angesprochenen Server wirksam eine Bestellung von Produkten bzw. Dienstleistungen aufgeben kann. Auf diese Weise wird mit ganz einfachen Mitteln und ohne große technische oder psychologische Hindernisse eine direkte Geschäftsbeziehung zwischen dem Auftraggeber bzw. Produzenten des TV-Beitrages oder von diesem ausgewählten Firmen und den angesprochenen TV-Zuschauern, die eine Zusatzinformation anfordern, aufgebaut (electronic shopping).

Um eine ganz persönliche Betreuung zu ermöglichen, wird bei einer weiteren bevorzugten Variante des erfindungsgemäßen Verfahrens mit der Übermittlung der Zusatzinformation auch die Möglichkeit zur Herstellung eines direkten Kontaktes, insbesondere eines Telefonkontaktes, eines PC-Phone-Kontaktes oder eines Email-Kontaktes zwischen dem interessierten TV-Zuschauer und dem Auftraggeber des TV-Beitrages bzw. einem Beauftragten desselben angeboten. Auch der Aufbau einer Bildtelefon-Verbindung oder der Kontakt mit einer persönlichen Webpage des Auftraggebers des TV-Spots im Internet sind möglich.

Von großem Interesse für den Auftraggeber bzw. Produzenten des TV-Beitrages bzw. für dessen Firma ist eine Verfahrensvariante, bei der der angesprochene Server bei jeder Kontaktaufnahme mit einem TV-Zuschauer die Adresse des Terminals des kontaktsuchenden TV-Zuschauers ermittelt und in einer für den Auftraggeber des TV-Beitrages zugänglichen Datenbank, insbesondere zusammen mit dem Datum und ggf. der Uhrzeit der Kontaktaufnahme, speichert. Damit wird eine Möglichkeit geschaffen, den Rücklauf bzw. das Publikumsinteresse aufgrund der entsprechenden TV-Sendung objektiv zu ermitteln und zu überwachen.

Zum Zwecke des Datenschutzes sieht eine Verbesserung dieser Verfahrensvariante vor, daß eine Speicherung der Adresse des Zuschauerterminals nur nach vorheriger Nachfrage durch den Server und entsprechende Freigabe durch den kontaktsuchenden TV-Zuschauer erfolgen kann.

Von wirtschaftlich besonderem Interesse ist das erfindungsgemäße Verfahren vor allem in den Fällen, in denen der TV-Beitrag ein kommerzieller Werbespot ist. Der Auftraggeber des Werbespots kann dann direkt oder indirekt zu einer sehr großen Anzahl von angesprochenen potentiellen Kunden Geschäftsbeziehungen aufbauen, was den Wert des Werbespots gegenüber herkömmlicher Werbung, welche ohne Rückkopplungsmöglichkeit einfach abgesetzt wird, ganz erheblich erhöht.

Bei einer möglichen Variante des erfindungsgemäßen Verfahrens wird die Verbindung zwischen dem Terminal des anfordernden TV-Zuschauers und dem Server über den TV-Rückkanal eines Breitband-Kabel-Netzwerks hergestellt.

Alternativ oder ergänzend hierzu kann bei einer anderen Variante aber auch die Verbindung zwischen dem Terminal des anfordernden TV-Zuschauers und dem Server über ein Telekommunikations-Netzwerk, insbesondere über ISDN (=Integrated Services Digital Network), über ein IP (=Internet Protocol)-Netzwerk oder über ADSL (=Asynchronous Digital Subscriber Line) hergestellt werden.

In den Rahmen der vorliegenden Erfindung fällt auch ein Multimedia-Server zur Unterstützung des erfindungsgemäßen Verfahrens. Dieser kann beispielsweise an ein Breitband-Kabel-Netzwerk angeschlossen sein, so daß eine direkte Verbindung über den TV-Rückkanal hergestellt werden kann.

Alternativ kann der Server aber auch an ein Telekommunikations-Netzwerk, insbesondere an ISDN (=Integrated Services Digital Network), an ein IP (=Internet Protocol)-Netzwerk oder an ein ADSL (=Asynchronous Digital Subscriber Line)-Netzwerk angeschlossen sein. Die Verbindung wird dann über eine entsprechende Leitung mit dem Netzwerk hergestellt.

Weiterhin fällt in den Rahmen der vorliegenden Erfindung auch ein Multimedia-Terminal zur Durchführung des erfindungsgemäßen Verfahrens, welches eine geeignete Einrichtung zum Erkennen und Lesen der parallel zum TV-Beitrag gesendeten elektronischen Adresse(n) aufweist.

In den meisten Fällen wird das Multimedia-Terminal ein herkömmliches Fernsehgerät sein, wobei der TV-Zuschauer die gewünschte Zusatzinformation über seine (in den meisten Haushalten standardmäßig vorhandene) Fernbedienung zum TV-Gerät abrufen kann.

Komfortablere Gestaltungsmöglichkeiten ergeben sich, wenn das Multimedia-Terminal ein Fernsehgerät mit Set-Top-Box ist.

Alternativ kann das Multimedia-Terminal aber auch ein Computer, vorzugsweise ein Personal Computer (PC) mit Videokarte und Bildschirm sein, wobei als Bedienungseinheit für den Zusatzinformation anfordernden TV-Zuschauer die Tastatur des Computers und/oder eine eventuell vorhandene Maus-Einrichtung in Betracht kommen.

Bevorzugt ist auch eine Ausführungsform des erfindungsgemäßen Multimedia-Terminals, bei der das Terminal Zugriff zu einer Speichereinheit hat, auf der der gesendete TV-Beitrag und/oder die parallel mitgesendete(n) elektronische(n) Adresse(n) abgespeichert und wieder abgerufen werden können. Damit hat der interessierte TV-Zuschauer auch die Möglichkeit, später nochmals auf den interessierenden TV-Beitrag zurückzugreifen.

Die Speichereinheit kann bei Weiterbildungen dieser Ausführungsform einen Zwischenspeicher, insbesondere in Form eines Cache-Speichers oder eine Festplatte umfassen. Denkbar ist aber auch die Abspeicherung auf Magnetbändern wie z.B. üblichen Videokassetten.

Das erfindungsgemäße Multimedia-Terminal kann zur Durchführung des erfindungsgemäßen Verfahrens entweder eine spezielle Software aufweisen oder mit einer entsprechenden zusätzlichen Hardware ausgerüstet sein.

Weitere Vorteile der Erfindung ergeben sich aus der nachfolgenden Beschreibung von Verfahrensvarianten. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die vorliegende Erfindung erlaubt es einem interessierten TV-Zuschauer, weitere Aktivitäten zu unternehmen, wenn er einen TV-Beitrag, insbesondere einen Werbespot von Interesse erkannt hat. Diese Aktivitäten können sein:
1. Der Teilnehmer kann einen Telefonruf zu einer im Werbespot angegebenen Rufnummer aufbauen, Dort kann er weitere Informationen erfahren oder auch erfragen.
2. Der Teilnehmer kann über den TV-Rückkanal weitere Informationen zu einem Werbespot anfordern.
3. Der Teilnehmer kann eine Internetsitzung zu einer im Werbespot angegebenen WWW-Adresse aufbauen. Dort kann er weitere Informationen erfahren oder auch erfragen. Er hat Zugriff zu audiovisuellen Präsentationen mit der Möglichkeit, weitere Informationen zu holen (Hyperlinks). Als 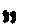 Krönung" kann der Zuschauer sofort bestellen.

Für alle nachfolgend genannten Varianten des Dialogaufbaus gilt, daß ggf. wenn gewünscht auch eine Bestellung vorgenommen werden kann (E-Commerce).

Dem Teilnehmer können weitere Video-Informationen zugespielt werden. Die Übertragung kann über einen Telefon- oder Telefax-Ruf über das ISDN erfolgen oder aber auch über neue Zugangsmöglichkeiten wie z.B. ADSL und dergleichen.

### Variante 1a:

Direkt vom Fernseher aus:
Über den TV-Rückkanal des BK-Netzes wird ein Anruf initiiert. Der Trigger im TV-Rückkanal wird mittels Fernbedienung gestartet; eine 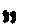 Dialogbox" im BK-Netz veranlaßt die Übertragung von Zusatzinfo über das BK-Netz zum Zuschauer.

### Variante 1b:

Direkt vom Fernseher aus:
Über den TV-Rückkanal des BK-Netzes wird ein Anruf initiiert. Der Trigger im TV-Rückkanal wird mittels Fernbedienung gestartet; eine 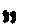 Dialogbox" im BK-Netz veranlaßt den Ruf zu einer im Werbespot definierten Ziel und den Telefonanruf zum Zuschauer, der Zusatzinfo wünscht.

### Variante 2:

Auf 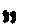 Knopfdruck" wird der (oder die) Werbespot(s) oder aber nur Adressen (Internet-Adresse, Telefonnummer) zum PC übertragen.

Ein Zusatzprogrmm im PC veranlaßt den Ruf zu einem im Werbespot definierten Ziel, wo der Zuschauer seine gewünschte Zusatzinfo erhalten kann. Alternativ dazu kann vom PC aus auch automatisch eine Verbindung zu einer Internet-Adresse hergestellt werden (WEB-Seite), wo der Zuschauer seine gewünschte Zusatzinfo erhalten kann.

### Variante 3:

Direkt vom PC aus:
Verbindungsaufbau für Telefonverbindung oder auch Internetsession WWW-mäßig wie in Variante 2.

Im Unterschied zur Variante 2 erfolgt die Triggerung nicht von der Fernbedienung aus, sondern die Steuerung erfolgt PC-mäßig. Das heißt, die Werbespots im Fernsehen/Videotext werden permanent zum PC übertragen bzw. von der TV-Karte im PC übernommen.

Die eigentliche Kontrolle der 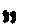 Info-Session" erfolgt ausschließlich vom PC aus. Dazu gehört die Auswahl des Spots, die Auswahl, welche Art der Info gewünscht wird, welcher Dialog gewählt werden soll (Telefon, Internet,...) etc.

Für diese Art eines Dienstes ist die Anbindung des Zuschauers über ein BK-Netz mit Rückkanal besonders vorteilhaft. Die Zusatzinfo kann über das BK-Netz zugespielt werden.

Für diese Art eines Dienstes ist die Anbindung des Zuschauers hier in der Funktion als Telefonkunde über ADSL o.ä. Schnittstellen ebenfalls vorteilhaft. Dies eröffnet die Möglichkeit, dem Teilnehmer auf Abruf zusätzliche Informationen zuzuspielen, beispielsweise Filme.

Werbespots von Reiseveranstaltern können besonders gut durch Bilder (z.B. live) vom Reiseziel ergänzt werden, der Kunde wird animiert.

Die Art der Dialogmöglichkeit erlaubt eine Rückmeldung für den Inserenten, wo der Zuschauer und potentielle Kunde den Werbespot gesehen hat, unabhängig davon, ob dieser direkt oder mit zeitlicher Verzögerung den Dialog aufnimmt.

## Patentansprüche

1. Verfahren zum Erlangen von Zusatzinformation betreffend einen an einem Endgerät (=Terminal) empfangenen Fernseh (=TV)- Beitrag, gekennzeichnet durch folgende Schritte:
- parallel zu der Information, die den an den Bildschirmen der TV-Zuschauer dargestellten TV-Beitrag repräsentiert, wird mindestens eine dem TV-Beitrag zugeordnete elektronische Adresse gesendet;
- wenn ein TV-Zuschauer Zusatzinformation zu dem TV-Beitrag über sein Terminal anfordert, stellt das Terminal über die zugeordnete elektronische Adresse eine Verbindung zu einem Server her, der die gewünschte Zusatzinformation aus einer Datenbank dem anfordernden Terminal bereitstellt, oder eine Verbindung zu einem Call Center, welches die gewünschte Zusatzinformation an den anfordernden TV-Zuschauer weiterleitet.

2. Verfahren nach Anspruch 1, dadurch gekennzeichnet, daß die übermittelte Zusatzinformation neben Textinformation auch graphische Information und/oder akustische Information umfaßt.

3. Verfahren nach einem der vorhergehenden Ansprüche, dadurch gekennzeichnet, daß die in der Datenbank oder im Call Center bereitgehaltene Zusatzinformation ständig aktualisiert wird.

4. Verfahren nach einem der vorhergehenden Ansprüche, dadurch gekennzeichnet, daß zusammen mit der Übermittlung der Zusatzinformation auch die Möglichkeit zur Eröffnung eines interaktiven Dialoges zwischen dem Terminal des TV-Zuschauers und dem angesprochenen Server angeboten wird.

5. Verfahren nach Anspruch 4, dadurch gekennzeichnet, daß der TV-Zuschauer im interaktiven Dialog mit dem angesprochenen Server weitere, nicht in der Datenbank gespeicherte Informationen, beispielsweise vom Auftraggeber bzw. Hersteller des TV-Beitrages angebotene Produkte, Dienstleistungen, Prospekte, detaillierte Produktunterlagen, Referenzen etc. anfordern kann.

6. Verfahren nach Anspruch 5, dadurch gekennzeichnet, daß der TV-Zuschauer bestimmte Zusatzinformationen nur dann abrufen kann, wenn er ein entsprechendes Passwort eingibt und/oder wenn die Adresse seines Terminals in einer Positivliste (=white list) gespeichert ist, auf die der angesprochene Server Zugriff hat.

7. Verfahren nach einem der Ansprüche 4 bis 6, dadurch gekennzeichnet, daß der TV-Zuschauer im interaktiven Dialog mit dem angesprochenen Server wirksam eine Bestellung von Produkten bzw. Dienstleistungen aufgeben kann.

8. Verfahren nach einem der vorhergehenden Ansprüche, dadurch gekennzeichnet, daß mit der Übermittlung der Zusatzinformation auch die Möglichkeit zur Herstellung eines direkten Kontaktes, insbesondere eines Telefonkontaktes, eines PC-Phone-Kontaktes oder eines Email-Kontaktes zwischen dem TV-Zuschauer und dem Auftraggeber des TV-Beitrages bzw. einem Beauftragten desselben angeboten wird.

9. Verfahren nach einem der vorhergehenden Ansprüche, dadurch gekennzeichnet, daß der angesprochene Server bei jeder Kontaktaufnahme mit einem TV-Zuschauer die Adresse des Terminals des kontaktsuchenden TV-Zuschauers ermittelt und in einer für den Auftraggeber des TV-Beitrages zugänglichen Datenbank, insbesondere zusammen mit dem Datum und ggf. der Uhrzeit der Kontaktaufnahme, speichert.

10. Verfahren nach Anspruch 9, dadurch gekennzeichnet, daß eine Speicherung der Adresse des Zuschauerterminals nur nach vorheriger Nachfrage durch den Server und entsprechende Freigabe durch den kontaktsuchenden TV-Zuschauer erfolgen kann.

11. Verfahren nach einem der vorhergehenden Ansprüche, dadurch gekennzeichnet, daß der TV-Beitrag ein kommerzieller Werbespot ist.

12. Verfahren nach einem der Ansprüche 1 bis 11, dadurch gekennzeichnet, daß die Verbindung zwischen dem Terminal des anfordernden TV-Zuschauers und dem Server über den TV-Rückkanal eines Breitband-Kabel-Netzwerks hergestellt wird.

13. Verfahren nach einem der Ansprüche 1 bis 11, dadurch gekennzeichnet, daß die Verbindung zwischen dem Terminal des anfordernden TV-Zuschauers und dem Server über ein Telekommunikations-Netzwerk, insbesondere über ISDN (=Integrated Services Digital Network), über ein IP (=Internet Protocol)-Netzwerk oder über ADSL (=Asynchronous Digital Subscriber Line) hergestellt wird.

14. Multimedia-Server zur Unterstützung des Verfahrens nach Anspruch 12, dadurch gekennzeichnet, daß der Server an ein Breitband-Kabel-Netzwerk angeschlossen ist.

15. Multimedia-Server zur Unterstützung des Verfahrens nach Anspruch 13, dadurch gekennzeichnet, daß der Server an ein Telekommunikations-Netzwerk, insbesondere an ISDN (=Integrated Services Digital Network), an ein IP (=Internet Protocol)-Netzwerk oder an ein ADSL (=Asynchronous Digital Subscriber Line)-Netzwerk angeschlossen ist.

16. Multimedia-Terminal zur Durchführung des Verfahrens nach einem der Ansprüche 1 bis 13, dadurch gekennzeichnet, daß eine geeignete Einrichtung zum Erkennen und Lesen der parallel zum TV-Beitrag gesendeten elektronischen Adresse(n) vorgesehen ist.

17. Multimedia-Terminal nach Anspruch 16, dadurch gekennzeichnet, daß das Terminal ein Fernsehgerät ist.

18. Multimedia-Terminal nach Anspruch 16, dadurch gekennzeichnet, daß das Terminal ein Fernsehgerät mit Set-Top-Box ist.

19. Multimedia-Terminal nach Anspruch 16, dadurch gekennzeichnet, daß das Terminal ein Computer, vorzugsweise ein Personal Computer (=PC) mit Videokarte und Bildschirm ist.

20. Multimedia-Terminal nach einem der Ansprüche 16 bis 19, dadurch gekennzeichnet, daß das Terminal Zugriff zu einer Speichereinheit hat, auf der der gesendete TV-Beitrag und/oder die parallel mitgesendete(n) elektronische(n) Adresse(n) abgespeichert und wieder abgerufen werden können.

21. Multimedia-Terminal nach Anspruch 20, dadurch gekennzeichnet, daß die Speichereinheit einen Zwischenspeicher, insbesondere in Form eines Cache-Speichers, oder eine Festplatte umfaßt.
